# EUROPEAN PATENT SPECIFICATION

(11) **EP 4 577 586 B1**
(45) Date of publication and mention of the grant of the patent: **12.08.2026**
(21) Application number: 23777107.6
(22) Date of filing: 05.09.2023
(51) Int. Cl.: C08F 290/06, C08G 63/695, C08G 63/91

(54) **TERMINALLY UNSATURATED POLYESTER WITH C-O-SI LINKAGE**
POLYESTER MIT UNGESÄTTIGTEN GRUPPEN, DIE C-O-SI VERBINDUNGEN ENTHALTEN
POLYESTER AVEC GROUPES TERMINAUX INSATURÉS AVEC LIAISON C-O-SI

(30) Priority: 09.09.2022 US 202263404979 P
(43) Date of publication of application: 02.07.2025
(73) Proprietor: Dow Silicones Corporation, Midland, MI 48686-0994 (US)
(72) Inventor: BAUMGARTNER, Ryan, Midland, MI 48686-0994 (US); MANGOLD, Shane, Midland, MI 48686-0994 (US); WENZLICK, Zachary, Midland, MI 48686-0994 (US); RIVERA, Juan, Midland, MI 48686-0994 (US)
(74) Representative: Elkington and Fife LLP
(86) International application number: PCT/US2023/031955
(87) International publication number: WO 2024/054421

(56) References cited:
- EP-B1- 0 182 316
- CN-A- 110 117 357
- CN-A- 111 533 895
- GB-A- 735 405

## Description

### Field of the Invention

The present invention relates to a polyester having terminally unsaturated groups and carbon-oxygen-silicon bonds. It is useful for making elastomer gels.

### Introduction

Compounds that contain terminally unsaturated groups are useful in preparing polymers, such as elastomers. Elastomers are crosslinked polymers that contain backbone polymers that are crosslinked to one another often through a crosslinking polymer. It is common to prepare elastomers with a reaction mixture comprising a backbone polymer and a crosslinker that are in solvent. Different applications benefit from reaction mixtures that either utilize an aqueous solvent or that utilize a non-aqueous solvent. Generally, reactants that are soluble in aqueous solvents are not soluble in non-aqueous solvents and vice versa. There are applications where it is desirable to prepare an elastomer in a non-aqueous, and in some instances a non-polar solvent to prepare a solvent-swollen elastomer.

One application where it is desirable to prepare an elastomer in a non-aqueous, or even a non-polar, solvent is in preparing elastomer gels or pastes that are sensory modifiers for personal care and cosmetic applications. The elastomer of such pastes typically comprised polysiloxane backbone polymers that are crosslinked with polysiloxane crosslinkers to form siloxane elastomers. These are well-known sensory modifiers for achieving a smooth, powdery and dry sensory feel.

It would advance the art of elastomers, particularly those useful in preparing sensory modifying pastes, that contain linkages that are less hydrolytically stable than C-O-C linkages. If the elastomer contains less hydrolytically stable linkages, then it is more easily to break down (degrade) making it more environmentally friendly. Desirably, the less hydrolytically stable linkage is between the backbone and the crosslinkers so that degradation breaks crosslinks. One way to accomplish this is to prepare elastomers from a backbone polymer that has terminal unsaturated reactive groups connected to the backbone polymer though a linkage that is less hydrolytically stable than C-O-C linkages.

The elastomer art would benefit from identifying a backbone polymer that is free of siloxane Si-O-Si linkages, that contains terminal unsaturated groups connected to the backbone polymer through linkages that are less hydrolytically stable than C-O-C linkages and that is soluble in non-aqueous solvents to facilitate crosslinking in the presence of non-aqueous solvent to make solvent swollen elastomers.

GB 735 405 relates to a method of making resinbonded, glass fibre articles in order to try to improve the bonding of the resin to the glass.

EP 0 182 316 relates to relates to a silyl -group-containing vinyl resin modified with polyester having in its molecule at least one silicon group to which a hydrolyzable group is bonded at the molecular ends or side chains.

### BRIEF SUMMARY OF THE INVENTION

The present invention solves the problem of providing a backbone polymer that is free of siloxane Si-O-Si linkages, that contains terminal unsaturated groups connected to the backbone polymer through linkages that are less hydrolytically stable than C-O-C linkages and that is soluble in non-aqueous solvents to facilitate crosslinking in the presence of non-aqueous solvent to make solvent swollen elastomers.

The present invention is a result of discovering that polyester polyols can be functionalized with terminal unsaturated carbon-carbon bonds (C=C) through a carbon-oxygen-silicon linkage (C-O-Si) to provide an organosilyl-functional polyester material that is soluble in non-aqueous solvents, even non-polar solvents. C-O-Si linkages are less hydrolytically stable than C-O-C linkages.

In a first aspect, the present invention is a composition comprising an organosilyl-functional polyester, where the organosilyl-functional polyester is characterized by having multiple terminal carbon-carbon double bonds bound to the polyester through a carbon-oxygen-silicon linkage, wherein the organosilyl-functional polyester has an average chemical structure (I), (II), or (II):

CH₂=CH-SiR₂O-[(CH₂)ₘOC(O)CH₂(CH₂)ₙCH₂C(O)O-]ₒ(CH₂)ₘ-OSiR₂-CH=CH₂ (I)

C(R)[CH₂OX]₃ (II)

CH₃CH(OX)CH₂CH₂OX (III)

where: R is independently in each occurrence selected from hydrocarbyl groups having from one to 8 carbon atoms; X is independently in each occurrence selected from - H, -C(O)-(CH₂)₄C(O)OH and -C(O)-(CH₂)₄C(O)OSiR₂-CH=CH₂ where R is as described above provided at least two X group are -C(O)-(CH₂)₄C(O)OSiR₂-CH=CH₂ groups; subscript m independently in each occurrence has an average value in a range of one to 8, subscript n has an average value in a range of 2 to 50; and subscript o has an average value in a range of 2 to 10.

In a second aspect, the present invention is a process for preparing the composition of the first aspect, the process comprises the step of preparing an organosilyl-functional polyester by providing a polyester polyol, a vinyl functional silylating agent and optionally a silylation catalyst and then reacting the vinyl functional silylating agent and polyester polyol together optionally in the presence of the silylation catalyst to silylate the polyester polyol for form the organosilyl-functional polyester, wherein the polyester polyol is selected from polyester polyols having an average chemical structure (IV), (V) or (VI):

HO-[(CH₂)ₘOC(O)CH₂(CH₂)ₙCH₂C(O)O-]ₒ(CH₂)ₘ-OH (IV)

C(R)[CH₂OH]₃ (V)

CH₃CH(OH)CH₂CH₂OH (VI)

where: R is independently in each occurrence selected from hydrocarbyl groups having from one to 8 carbon atoms; subscript m independently in each occurrence has an average value in a range of one to 8; subscript n has an average value in a range of 2 to 5; and subscript o has an average value in a range of 2 to 10.

The composition of the present invention is suitable for use in making elastomers by crosslinking with a crosslinker that reacts with the C=C bonds.

### DETAILED DESCRIPTION OF THE INVENTION

Test methods refer to the most recent test method as of the priority date of this document when a date is not indicated with the test method number. References to test methods contain both a reference to the testing society and the test method number. The following test method abbreviations and identifiers apply herein: ASTM refers to ASTM International methods; EN refers to European Norm; DIN refers to Deutsches Institut für Normung; ISO refers to International Organization for Standards; and UL refers to Underwriters Laboratory.

Products identified by their tradename refer to the compositions available under those tradenames on the priority date of this document.

"Multiple" means two or more. "And/or" means "and, or as an alternative". All ranges include endpoints unless otherwise indicated.

"Polyester" refers to a polymer containing multiple ester linkages.

"Organosilyl-functional" refers to having at least one -SiR₃ group, preferably multiple -SiR₃ groups, where each R is independently selected from hydrocarbyl groups including alkyl groups, alkenyl groups and aryl groups.

"Molecular weight", "MW" and "Mw" are interchangeable and refer to the weight-average molecular weight of a polymer. Determine molecular weight using gel permeation chromatography using a Waters 2695 Separation Module with a vacuum degasser and a Waters 2410 differential refractometer. Use two (300 millimeter by 7.5 millimeter) Polymer Laboratories PLgel 5 micrometers Mixed-C columns (molecule weight separation range of 200-2,000,000), preceded by a PLgel 5 micrometer guard column (50 millimeters by 7.5 millimeters). Use certified grade tetrahydrofuran (THF) flowing at 1.0 milliliters per minute as the eluent while maintaining the column and detector at 35 °C. Prepare samples in THF at approximately 0.15 volume-percent concentration and allow to solvate for two hours with occasional shaking and filter through a 0.45 micrometer polytetrafluoroethylene syringe filter prior to analysis. Inject 100 microliters of sample for analysis and collect data for 30 minutes. Collect data and conduct analysis using ThermoLabsystems Atlas chromatography software and Polymer Laboratories Cirrus GPC software. Molecular weight averages are relative to a calibration curve (3^{rd} order) created suing polystyrene standards covering the molecular weight range of 580 to 2,750,000.

The present invention includes a composition comprising an organosilyl-functional polyester. The composition can be only the organosilyl-functional polyester or can comprise other components in addition to the organosilyl-functional polyester. The organosilyl-functional polyester is characterized by having multiple terminal carbon-carbon double bonds bound to the polyester through a carbon-oxygen-silicon (C-O-Si) linkage, wherein the organosilyl-functional polyester has an average chemical structure (I), (II), or (II):

CH₂=CH-SiR₂O-[(CH₂)ₘOC(O)CH₂(CH₂)ₙCH₂C(O)O-]ₒ(CH₂)ₘ-OSiR₂-CH=CH₂ (I)

C(R)[CH₂OX]₃ (II)

CH₃CH(OX)CH₂CH₂OX (III)

where: R is independently in each occurrence selected from hydrocarbyl groups having from one to 8 carbon atoms; X is independently in each occurrence selected from - H, -C(O)-(CH₂)₄C(O)OH and -C(O)-(CH₂)₄C(O)OSiR₂-CH=CH₂ where R is as described above provided at least two X group are -C(O)-(CH₂)₄C(O)OSiR₂-CH=CH₂ groups; subscript m independently in each occurrence has an average value in a range of one to 8, subscript n has an average value in a range of 2 to 50; and subscript o has an average value in a range of 2 to 10. The C-O-Si linkage can be attached directly to an ester group, and even include a carbon of the ester group, or can be attached indirectly to the ester group through another linking group such as a divalent hydrocarbyl chain. The organosilyl-functional polyester can have a C-O-Si linkage to a terminal carbon-carbon double bond (C=C group) attached to each ester group. The C=C group is desirably part of a vinyl or allyl group. The organosilyl-functional polyester can be linear or branched. The organosilyl-functional polyester can be one or a combination of more than one organosilyl-functional polyester.

The organosilyl-functional polyesters include any one or any combination of more than one organosilyl-functional polyester having an average chemical structure (I), (II) or (III):

CH₂=CH-SiR₂O-[(CH₂)ₘOC(O)CH₂(CH₂)ₙCH₂C(O)O-]ₒ(CH₂)ₘ-OSiR₂-CH=CH₂ (I)

C(R)[CH₂OX]₃ (II)

CH₃CH(OX)CH₂CH₂OX (III)

where:
R is independently in each occurrence selected from hydrocarbyl groups having from one to 8 carbon atoms, and can be all the same or can differ from one another. The hydrocarbyl groups can have one or more, two or more, three or more, four or more, 5 or more, 6 or more, even 7 or more while at the same time typically contain 8 or fewer, and can contain 7 or fewer, 6 or fewer, 5 or fewer, 4 or fewer, 3 or fewer, even 2 or fewer carbon atoms. Desirably, the R groups are selected from a group consisting of methyl, ethyl, propyl and phenyl groups.
X is independently in each occurrence selected from -H, -C(O)-(CH₂)₄C(O)OH and -C(O)-(CH₂)₄C(O)OSiR₂-CH=CH₂ where R is as described above provided at least two X group are -C(O)-(CH₂)₄C(O)OSiR₂-CH=CH₂ groups.
Subscript m independently in each occurrence has an average value in a range of one to 8, and preferably has a value of 2 or more and can have a value of 3 or more, 4 or more, 5 or more, 6 or more, even 7 or more, while at the same time typically has a value of 8 or less, 7 or less, 6 or less, 5 or less, 4 or less, 3 or less, even 2 or less. Desirably, subscript m is 2 in each occurrence.
Subscript n has an average value in a range of 2 to 5. Subscript n can have a value of 2 or more, 3 or more, 4 or more, 5 or more, 10 or more, 15 or more, 20 or more, 25 or more, 30 or more, 35 or more, even 40 or more while at the same time typically has a value of 50 or less, 45 or less, 40 or less, 35 or less, 31 or less, 25 or less, 20 or less, 10 or less, even 5 or less.
subscript o has an average value in a range of 2 to 10. Subscript o can have a value of 2 or more, 3 or more, 4 or more, 5 or more, 6 or more, 7 or more, 8 or more, even 9 or more, while at the same time typically has a value of 10 or less, 9 or less, 8 or less, 7 or less, 6 or less, 5 or less, 4 or less, even 3 or less.

The organosilyl-functional polyester desirably has a Mw in a range of 1000 to 5000 grams per mole (g/mol), preferably 1200 to 2500, and can be in a range of 1400 to 2300.

The composition of the present invention can be free of or can comprise any one or any combination of one or more component in addition to the organosilyl-functional polyester. For example, the composition can be free of or comprise any one or any combination of more than one of the following components: solvent, silylhydride-functional polysiloxane, and hydrosilylation catalyst.

The composition of the present invention can comprise a solvent. Typically, the solvent is a non-aqueous solvent. A non-aqueous solvent is contains less than one weight-percent water based on solvent weight and can be free of water. The solvent is desirably non-polar.

The solvent can be, for example, any one or any combination of fluids selected from a group consisting of hydrocarbons, ethers, esters, alcohols, and siloxane fluids. Examples of suitable hydrocarbon fluids include farnesane, squalane, hemisqualane, isohexadecane, undecane, tridecane and isododecane. Examples of suitable ether fluids include material sold under the name CETIOL^{™} OE from BASF (CETIOL is a trademark of Cognis IP Management GMBH), ethyl 3-(2,4-dimethyl-1,3-dioxolan-2-yl)propanoate, ethyl glycerin acetal levulinate, ethyl phenethyl acetal, and isopropylideneglyceryl cocoate. Examples of suitable ester fluids include isodecyl neopentanoate, isostearyl neopentanoate, isononyl isononanoate, ethyl acetate, capric triglyceride, caprylic triglyceride, triheptanoin, triisostearin, diisopropyl acetate, diisopropyl adipate, diisobutyl adipate, diethylhexyl adipate, n-propyl acetate, isobutyl acetate, n-butyl acetate, trimethylolpropane tricaprylate, trimethylolpropane tricaprate, dipentaerythrityl hexa C5-9 acid esters, C12-15 alkyl benzoate, triethylhexanoin, neopentyl glycol diheptanoate, diheptylsuccinate, heptylundecylenate, propylene glycol dibenzoate, dipropylene glycol dibenzoate, ethylhexyl palmitate, ethylhexyl stearate, isopropyl laurate, hexyl laurate, isopropyl myristate, isopropyl palmitate, n-butyl stearate, propylene glycol dicaprylate, propylene glycol dicaprate, coco caprylate, coco caprate, ethylhexyl cocoate, oleyl erucate, propylhelptyl caprylate, decyl oleate, hexyldecyl stearate, and propylene glycol laurate. Examples of suitable siloxane fluids include cyclic siloxanes such as cyclotetrasiloxane such as that available as DOWSIL^{™} 244 Fluid (DOWSIL is a trademark of The Dow Chemical Company), cyclopentasiloxane such as that available as DOWSIL^{™} 245 Fluid, or cyclohexasiloxane such as that available as DOWSIL^{™} 246 Fluid, linear and branched alkyl and aryl siloxanes such as caprylyl methicone such as that available as DOWSIL^{™} FZ-3196, and linear dimethylsiloxanes such as that available as DOWSIL^{™} 200 Fluids, and phenyl trimethicone such as that available as DOWSIL^{™} 556 Fluid.

The solvent can be a "high volatility" solvent selected from isododecane (boiling point of 210 °C at 101 MegaPascals pressure), farnesane (boiling point of 252 °C at 101 MegaPascals pressure), undecane (boiling point of 195 °C at 101 MegaPascals pressure), n-dodecane (boiling point of 216 °C at 101 MegaPascals pressure) and tridecane (boiling point of 234 °C at 101 MegaPascals pressure). These solvents form gels that can be turned into pastes having greater wash durability than pastes made from typical purely silicone elastomers.

The composition of the present invention can comprise a SiH-functional polysiloxane in addition to the organosilyl-functional polyester. The SiH-functional polysiloxane contains two or more silylhydride (SiH) functionalities. The SiH functionalities can undergo hydrosilylation addition to the terminal C=C bonds of the organosilyl-functional polyester to form a crosslinked polymer, preferably a crosslinked elastomer material. The SiH-functional polysiloxane can be branched or linear, but is preferably linear. The SiH-functional polysiloxane can have one or more than one terminal SiH group while being free of pendant SiH groups, can have one or more than one pendant SiH group while being free of terminal SiH groups, or can have a combination of one or more terminal SiH group and one or more pendant SiH group.

Desirably, the SiH functional polysiloxane is linear and is one or any combination of more than one compound selected from those having the following average chemical formula:

(R'₃SiO_{1/2})₂(R'₂SiO_{2/2})_{b}

where:
R' is independently in each occurrence selected from a group consisting of hydrogen and R groups where R is as described above, provided at least two R' groups are hydrogen;
Subscript b is the average number of (R'₂SiO_{2/2}) group per molecule and typically has a value of 5 or more, and can be 10 or more, 15 or more, 20 or more, 30 or more, 50 or more, 70 or more, even 90 or more while at the same time is typically 120 or less, even 100 or less and can be 70 or less, 50 or less, 30 or less, 20 or less, 15 or less, even 10 or less.

Examples of suitable silylhydride-functional polysiloxanes include those having the following average molecular formulae:

(H(CH₃)₂SiO_{1/2})₂((CH₃)SiO_{2/2})₂₀,

((CH₃)₃SiO_{1/2})₂((CH₃)₂SiO_{2/2})₂₅(H(CH₃)SiO_{2/2})₆,

((CH₃)₃SiO_{1/2})₂((CH₃)₂SiO_{2/2})₉₂(H(CH₃)SiO_{2/2})₆, and

((CH₃)₃SiO_{1/2})₂((CH₃)₂SiO_{2/2})_{3.3}(H(CH₃)SiO_{2/2})₆.

When present, the silylhydride-functional polysiloxanes are desirably present at a concentration sufficient to provide a molar ratio of SiH groups from the silylhydride-functional polysiloxanes to C=C from the organosilyl-functional polyester (SiH:C=C molar ratio) that is 0.70 or more, preferably 0.90 or more while at the same time is typically 1.5 or less, preferably 1.0 or less, and more preferably 0.95 or less.

The composition can comprise a hydrosilylation catalyst. Typically, the hydrosilylation catalyst is any one or any combination of more than one platinum-based hydrosilylation catalyst. Platinum-based hydrosilylation catalysts include compounds and complexes such as platinum (0)-1,3-divinyl-1,1,3,3-tetramethyldisiloxane (Karstedt's catalyst), H₂PtCl₆, di-µ.-carbonyl di-.π.-cyclopentadienyldinickel, platinum-carbonyl complexes, platinum-divinyltetramethyldisiloxane complexes, platinum cyclovinylmethylsiloxane complexes, platinum acetylacetonate (acac), platinum black, platinum compounds such as chloroplatinic acid, chloroplatinic acid hexahydrate, a reaction product of chloroplatinic acid and a monohydric alcohol, platinum bis(ethylacetoacetate), platinum bis(acetylacetonate), platinum dichloride, and complexes of the platinum compounds with olefins or low molecular weight organopolysiloxanes or platinum compounds microencapsulated in a matrix or core-shell type structure. The hydrosilylation catalyst can be part of a solution that includes complexes of platinum with low molecular weight organopolysiloxanes that include 1,3-diethenyl-1,1,3,3-tetramethyldisiloxane complexes with platinum. These complexes may be microencapsulated in a resin matrix. The catalyst can be 1,3-diethenyl-1,1,3,3-tetramethyldisiloxane complex with platinum.

The concentration of platinum-based hydrosilylation catalyst is typically 5 weight-parts per million (ppm) or more, preferably 10 ppm or more, and can be 25 ppm or more, 50 ppm or more, even 75 ppm or more while at the same time is typically 500 ppm or less, 400 ppm or less, 300 ppm or less, 200 ppm or less and preferably 100 ppm or less and can be 90 ppm or less, 80 ppm or less, 70 ppm or less, 60 ppm or less, even 50 ppm or less based on weight of the composition.

The present invention includes a process for preparing the organosilyl-functional polyester of the present invention. The process comprises the step of preparing an organosilyl-functional polyester by providing a polyester polyol, a vinyl functional silylating agent and optionally a silylation catalyst and then reacting the vinyl functional silylating agent and polyester polyol together optionally in the presence of a silylation catalyst to silylate the polyester polyol to form the organosilyl-functional polyester, wherein the polyester polyol is selected from polyester polyols having an average chemical structure (IV), (V) or (VI):

HO-[(CH₂)ₘOC(O)CH₂(CH₂)ₙCH₂C(O)O-]ₒ(CH₂)ₘ-OH (IV)

C(R)[CH₂OH]₃ (V)

CH₃CH(OH)CH₂CH₂OH (VI)

where: R is independently in each occurrence selected from hydrocarbyl groups having from one to 8 carbon atoms; subscript m independently in each occurrence has an average value in a range of one to 8; subscript n has an average value in a range of 2 to 5; and subscript o has an average value in a range of 2 to 10.

Generally, it is desirable to react the vinyl functional silylating agent and polyester polyol together (that is, to conduct the silylation reaction) while mixing at a temperature of 25 degrees Celsius (°C) or higher, preferably 50 °C or higher, 75 °C or higher, 100 °C or higher, even 120 °C or higher or 130 °C or higher while at the same time typically 200 °C or lower, preferably 175 °C or lower, 150 °C or lower, even 140 °C or lower, or 130 °C or lower. The reaction proceeds until the silylation of OH groups is either no longer occurring or has reached a point that desirable to stop the reaction. Desirably, the silylation reaction continues until 80 to 100 mole-percent of the OH groups on the polyester polyl are silylated, provided there are multiple silylated OH groups per molecule. Nuclear magnetic resonance spectroscopy or Fourier transform infrared spectroscopy is useful for monitoring a reaction mixture to determine extend of OH silylation. When the reaction is complete, it is desirable to cool the reaction mixture down to 23 °C.

The vinyl functional silylating agent is desirably any one or any combination of more than one component selected from divinyl disilazanes (such as 1,1,3,3,-tetraalkyl-1,3-divinyldisilazane), vinylchlorosilane, vinylalkyoxysilane, divinylsilylamide, vinylsilylcarbamate, and vinylsilyl acetate. Typically, the concentration of vinyl functional silylating agent is in a range of 1.5 to 4 moles per mole of polyester polyol.

The reaction of the polyester polyol and vinyl functional silylating agent can occur in the presence or absence of a silylation catalyst. Desirably, conduct the reaction of the polyester polyol and vinyl functional silylating agent in the presence of a silylation catalyst. Suitable silylation catalysts include acids such as Lewis acids or bases such as Lewis bases. Examples of suitable silylation catalysts include saccharin, imidazole, ammonium chloride, trifluoroacetic acid and ammonium sulfate. Generally, the silylation catalyst is present at a concentration of zero mole-percent (mol%) or more, preferably 0.001 mol% or more, and can be 0.005 mol% or more while at the same time is typically 0.100 mol% or less, or even 0.050 mol% or less, 0.010 mol% or less, or even 0.005 mol% or less relative to moles of polyester polyol.

The polyester polyol includes any one or any combination of more than one polyester polyol having an average chemical structure selected from (IV), (V) and (VI):

HO-[(CH₂)ₘOC(O)CH₂(CH₂)ₙCH₂C(O)O-]ₒ(CH₂)ₘ-OH (IV)

C(R)[CH₂OH]₃ (V)

CH₃CH(OH)CH₂CH₂OH (VI)

where:
R is independently in each occurrence selected from hydrocarbyl groups having from one to 8 carbon atoms, and can be all the same or can differ from one another. The hydrocarbyl groups can have one or more, two or more, three or more, four or more, 5 or more, 6 or more, even 7 or more while at the same time typically contain 8 or fewer, and can contain 7 or fewer, 6 or fewer, 5 or fewer, 4 or fewer, 3 or fewer, even 2 or fewer carbon atoms. Desirably, the R groups are selected from a group consisting of methyl, ethyl, propyl and phenyl groups.
Subscript m independently in each occurrence has an average value in a range of one to 8, and preferably has a value of 2 or more and can have a value of 3 or more, 4 or more, 5 or more, 6 or more, even 7 or more, while at the same time typically has a value of 8 or less, 7 or less, 6 or less, 5 or less, 4 or less, 3 or less, even 2 or less. Desirably, subscript m is 2 in each occurrence.
Subscript n has an average value in a range of 2 to 5. Subscript n can have a value of 2 or more, 3 or more, 4 or more, 5 or more, 10 or more, 15 or more, 20 or more, 25 or more, 30 or more, 35 or more, even 40 or more while at the same time typically has a value of 50 or less, 45 or less, 40 or less, 35 or less, 31 or less, 25 or less, 20 or less, 10 or less, even 5 or less.
Subscript o has an average value in a range of 2 to 10. Subscript o can have a value of 2 or more, 3 or more, 4 or more, 5 or more, 6 or more, 7 or more, 8 or more, even 9 or more, while at the same time typically has a value of 10 or less, 9 or less, 8 or less, 7 or less, 6 or less, 5 or less, 4 or less, even 3 or less.

### Examples

Table 1 lists the components for preparing the following examples.

**Table 1**

| **Component** | **Description** | **Source** |
|---|---|---|
| Polyester 1 | HO-[(CH₂)₂OC(O)CH₂(CH₂)₃₁CH₂C(O)O-]_{3.9}(CH₂)₂-OH with an Mw of 2000 g/mol. | Available from Croda under the name PRIPLAST^{™} 3238. |
| Polyester 2 | HO-[(CH₂)₂OC(O)CH₂(CH₂)₁₃CH₂C(O)O-]_{7.5}(CH₂)₂-OH with an Mw of 2000 g/mol. | Available from Croda under the name PRIPLAST^{™} 3294. |
| Polyester 3 | Reaction product of adipic acid with trimethylolpropane and 1,3-butanediol in molar ratio of approximately 2:1.3:1 respectively. Average Mw is 1430 g/mol. | Available from Covestro under the name DESMOPHEN^{™} 1100. |
| Vinyl Functional Silylating Agent | 1,1,3,3-tetramethyl-1,3-divinyldisilazane | From Sigma-Aldrich. |
| Catalyst | Saccharine | From Sigma-Aldrich. |

PRIPLAST is a trademark of Croda International PLC. DESMOPHEN is a trademark of Covestro Intellectual property GMBH.

### Preparation of Organosilyl-Functional Polyesters

Table 2 provides concentrations of polyester polyol, catalyst and vinyl functional silylating agent used to prepare each organosilyl-functional polyester in grams as well as reaction time (hours) and reaction temperature (°C) for each of Examples 1-3. Additionally, Table 2 lists average mole-percent OH substitution (silylation) relative to moles OH in polyester polyol, weight-percent vinyl groups per molecule based on organosilyl-functional polyester weight, and average number of vinyl groups per organosilyl-functional polyester molecule.

**Table 2**

| Example | Polyester Polyol | | Catalyst (g) | Vinyl Functional Silylating Agent (g) | Temp (°C) | Time (Hours) | Mol% OH Substitution | Wt% Vinyl | Vinyl Groups per Molecule |
|---|---|---|---|---|---|---|---|---|---|
| | Identity | (g) | | | | | | | |
| 1 | 1 | 75 | 0.035 | 10.4 | 110 | 4 | 95 | 2.5 | 2 |
| 2 | 2 | 50 | 0.023 | 6.95 | 110 | 6 | 100 | 2.5 | 2 |
| 3 | 3 | 50 | 0.009 | 35.5 | 110 | 6 | 80 | 7.8 | 4 |

Add the polyester polyol, vinyl functional silylating agent and catalyst to a 500 milliliter (mL) round bottom flask. Add a polytetrafluorethylene stir bar and purge the flask and contents with nitrogen, sealing with a septum. Heat the contents using a heating plate to the reaction temperature while stirring for the reaction time. Allow the mixture to cool to 23 °C and remove residual vinyl functional silylating agent under vacuum (1.3 kilopascals) at 130 °C for 2 hours to obtain the resulting organosilyl-functional polyester.

Characterize the resulting organosilyl-functional polyester by proton (¹H) nuclear magnetic resonance (NMR) spectroscopy. Dissolve a 10 milligram sample of organosilyl-functional polyester in 0.6 milliliters of deuterated benzene (d6-benzene) and analyze using a 400 Megahertz Varian ¹H NMR spectrometer. Use a 5 second acquisition time and a relaxation delay time of 15 seconds. Collect 16 scans and average to get resulting spectrum. Reference resulting spectrum to benzene at δ 7.16 ppm. Regions for the groups of interest in the spectra are: vinyl region ("V") integrated from δ 5.6-6.5 ppm; methylene region adjacent to hydroxyl ("O") integrated over δ 4.2-4.3 ppm to determine hydroxyl substitution. δ 2.1-2.3 ppm to account for methylene region adjacent to ester region ("E") and methyl region at δ 0.15-0.3 ppm to account for silylation ("S"). Set integration based on number of repeat units along backbone of polyester polymer: for Polyester 1 normalize region "E" to 16; for Polyester 2 normalize region "E" to 30, and for Polyester 3 normalize region "E" to 24. Calculate mol% OH substitution as the integration from the region corresponding to "V" divided by the theoretical vinyl integration based on the OH per polyester polyol. The theoretical vinyl integration Polyester 1 and 2 is 6 and Polyester 3 is 16.5. Use the following calculations: $Mol % OH Substitution = \left[\left(V\right)/\left(OH per polyester poly\right)*3\right] * 100 %$ 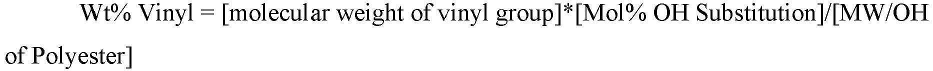 Wt% Vinyl = [molecular weight of vinyl group]*[Mol% OH Substitution]/[MW/OH of Polyester] where MW/OH of Polyester 1 and 2 is 1000 and Polyester 3 is 260.$Vinyl Groups per Polyester = \left[Mol%OH substitution\right] * \left[OH per Polyester\right]$ where OH per polyester is 2 for Polyesters 1 and 2 and is 5.5 for Polyester 3.

Example 1 has an average chemical structure:

CH₂=CH-Si(CH₃)₂O[(CH₂)₂OC(O)CH₂(CH₂)₃₁CH₂C(O)O-]_{3.9}(CH₂)₂OSi(CH₃)₂-CH=CH₂

Example 2 has an average chemical structure:

CH₂=CH-Si(CH₃)₂O[(CH₂)₂OC(O)CH₂(CH₂)₁₃CH₂C(O)O-]_{7.5}(CH₂)₂OSi(CH₃)₂-CH=CH₂

Example 3 can have a combination of structures but is expected to include material with the following average chemical structure:

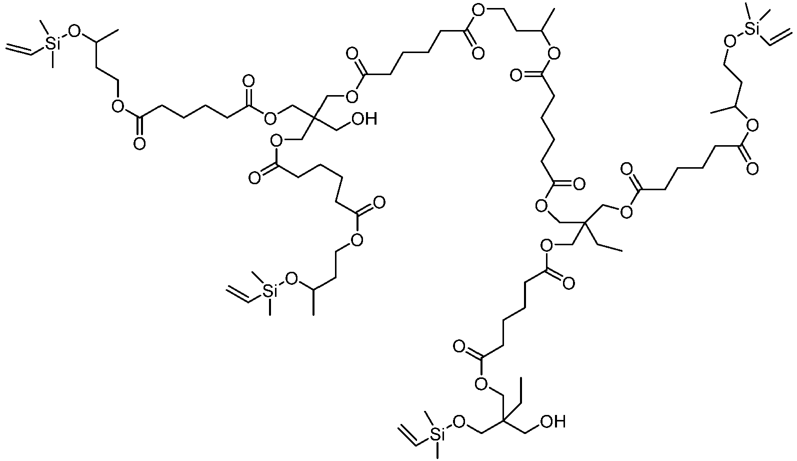

### Compositions with Organosilyl-Functionalized Polyesters and Other Components

The organosilyl-functionalized polyesters can be combined with a solvent, a SiH functional polysiloxane containing on average at least two SiH functionalities per molecule, and a hydrosilylation catalyst to prepare a reaction mixture for preparing an elastomer. The organosilyl-functionalized polyesters and SiH functional polysiloxane can be soluble in the solvent.

## Claims

1. A composition comprising an organosilyl-functional polyester, where the organosilyl-functional polyester is **characterized by** having multiple terminal carbon-carbon double bonds bound to the polyester through a carbon-oxygen-silicon linkage, wherein the organosilyl-functional polyester has an average chemical structure (I), (II), or (III):
CH₂=CH-SiR₂O-[(CH₂)ₘOC(O)CH₂(CH₂)ₙCH₂C(O)O-]ₒ(CH₂)ₘ-OSiR₂-CH=CH₂ (I)
C(R)[CH₂OX]₃ (II)
CH₃CH(OX)CH₂CH₂OX (III)
where:
R is independently in each occurrence selected from hydrocarbyl groups having from one to 8 carbon atoms;
X is independently in each occurrence selected from -H, -C(O)-(CH₂)₄C(O)OH and - C(O)-(CH₂)₄C(O)OSiR₂-CH=CH₂ where R is as described above provided at least two X group are -C(O)-(CH₂)₄C(O)OSiR₂-CH=CH₂ groups;
subscript m independently in each occurrence has an average value in a range of one to 8,
subscript n has an average value in a range of 2 to 50; and
subscript o has an average value in a range of 2 to 10.

2. The composition of Claim 1, wherein the terminal carbon-carbon double bond are part of vinyl groups.

3. The composition of any one previous Claim, wherein the organosilyl-functional polyester has an average weight-average molecular weight in a range of 1000 to 5000 g/mol measured by the method indicated in the description.

4. The composition of any one previous Claim, the composition comprising the organosilyl-functional polyester in combination with a SiH-functional polysiloxane comprising at least two SiH functionalities.

5. The composition of Claim 4, further comprising a hydrosilylation catalyst and a solvent, where the organosilyl-functional polyester and SiH-functional polysiloxane are dissolved in the solvent to form a solution.

6. A process for preparing the composition of Claim 1, the process comprises the step of preparing an organosilyl-functional polyester by providing a polyester polyol, a vinyl functional silylating agent and optionally a silylation catalyst and then reacting the vinyl functional silylating agent and polyester polyol together optionally in the presence of the silylation catalyst to silylate the polyester polyol to form the organosilyl-functional polyester, wherein the polyester polyol is selected from polyester polyols having an average chemical structure (IV), (V) or (VI):
HO-[(CH₂)ₘOC(O)CH₂(CH₂)ₙCH₂C(O)O-]ₒ(CH₂)ₘ-OH (IV)
C(R)[CH₂OH]₃ (V)
CH₃CH(OH)CH₂CH₂OH (VI)
where:
R is independently in each occurrence selected from hydrocarbyl groups having from one to 8 carbon atoms;
subscript m independently in each occurrence has an average value in a range of one to 8;
subscript n has an average value in a range of 2 to 5; and
subscript o has an average value in a range of 2 to 10.

7. The process of claim 6, wherein the vinyl functional silylating agent is 1,1,3,3-tetraalkyl-1,3-divinyldisilazane and saccharine is present as a catalyst.

8. The process of Claim 6 or 7, wherein sufficient vinyl functional silylating agent is present to silylate 80 to 100 mole-percent of the hydroxyl groups on the polyester polyol and 80-100 mol-percent of the polyester polyol hydroxyl groups become silylated.

## Patentansprüche

1. Zusammensetzung, umfassend einen organosilylfunktionellen Polyester, wobei der organosilylfunktionelle Polyester **gekennzeichnet ist durch** ein Aufweisen mehrerer terminaler Kohlenstoff-Kohlenstoff-Doppelbindungen, die über eine Kohlenstoff-Sauerstoff-Silicium-Bindung an den Polyester gebunden sind, wobei der organosilylfunktionelle Polyester eine durchschnittliche chemische Struktur (I), (II) oder (III) aufweist:
CH₂=CH-SiR₂O-[(CH₂)ₘOC(O)CH₂(CH₂)ₙCH₂C(O)O-]ₒ(CH₂)ₘ-OSiR₂-CH=CH₂ (I)
C(R)[CH₂OX]₃ (II)
CH₃CH(OX)CH₂CH₂OX (III)
wobei:
R bei jedem Auftreten unabhängig ausgewählt ist aus Hydrocarbylgruppen, die von ein bis 8 Kohlenstoffatome aufweisen;
X bei jedem Auftreten unabhängig ausgewählt ist aus -H, -C(O)-(CH₂)₄C(O)OH und -C(O)-(CH₂)₄C(O)OSiR₂-CH=CH₂, wobei R wie oben beschrieben ist, vorausgesetzt, dass mindestens zwei X-Gruppen -C(O)-(CH₂)₄C(O)OSiR₂-CH=CH₂-Gruppen sind;
Index m bei jedem Auftreten unabhängig einen Durchschnittswert in einem Bereich von eins bis 8 aufweist,
Index n einen Durchschnittswert in einem Bereich von 2 bis 50 aufweist; und
Index o einen Durchschnittswert in einem Bereich von 2 bis 10 aufweist.

2. Zusammensetzung nach Anspruch 1, wobei die terminalen Kohlenstoff-Kohlenstoff-Doppelbindungen Teil von Vinylgruppen sind.

3. Zusammensetzung nach einem der vorstehenden Ansprüche, wobei der organosilylfunktionelle Polyester ein durchschnittliches gewichtsmittleres Molekulargewicht in einem Bereich von 1000 bis 5000 g/mol aufweist, gemessen durch das in der Beschreibung angegebene Verfahren.

4. Zusammensetzung nach einem der vorstehenden Ansprüche, die Zusammensetzung umfassend den organosilylfunktionellen Polyester in Kombination mit einem SiH-funktionellen Polysiloxan, umfassend mindestens zwei SiH-Funktionalitäten.

5. Zusammensetzung nach Anspruch 4, ferner umfassend einen Hydrosilylierungskatalysator und ein Lösungsmittel, wobei der organosilylfunktionelle Polyester und das SiH-funktionelle Polysiloxan in dem Lösungsmittel gelöst sind, um eine Lösung auszubilden.

6. Prozess zum Herstellen der Zusammensetzung von Anspruch 1, wobei der Prozess den Schritt des Herstellens eines organosilylfunktionellen Polyesters umfasst, durch ein Bereitstellen eines Polyesterpolyol, eines vinylfunktionellen Silylierungsmittels und optional eines Silylierungskatalysators und dann ein Umsetzen des vinylfunktionellen Silylierungsmittels und des Polyesterpolyols zusammen optional in der Gegenwart des Silylierungskatalysators, um das Polyesterpolyol zu silylieren, um den organosilylfunktionellen Polyester auszubilden, wobei das Polyesterpolyol ausgewählt ist aus Polyesterpolyolen, die eine durchschnittliche chemische Struktur (IV), (V) oder (VI) aufweisen:
HO-[(CH₂)ₘOC(O)CH₂(CH₂)ₙCH₂C(O)O-]ₒ(CH₂)ₘ-OH (IV)
C(R)[CH₂OH]₃ (V)
CH₃CH(OH)CH₂CH₂OH (VI)
wobei:
R bei jedem Auftreten unabhängig ausgewählt ist aus Hydrocarbylgruppen, die von ein bis 8 Kohlenstoffatome aufweisen;
Index m bei jedem Auftreten unabhängig einen Durchschnittswert in einem Bereich von eins bis 8 aufweist;
Index n einen Durchschnittswert in einem Bereich von 2 bis 5 aufweist; und
Index o einen Durchschnittswert in einem Bereich von 2 bis 10 aufweist.

7. Prozess nach Anspruch 6, wobei das vinylfunktionelle Silylierungsmittel 1,1,3,3-Tetraalkyl-1,3-divinyldisilazane ist und Saccharin als ein Katalysator vorhanden ist.

8. Prozess nach Anspruch 6 oder 7, wobei ausreichend vinylfunktionelles Silylierungsmittel vorhanden ist, um 80 bis 100 Mol-Prozent der Hydroxylgruppen an dem Polyesterpolyol zu silylieren und 80-100 Mol-Prozent der Polyesterpolyol-Hydroxylgruppen silyliert werden.

## Revendications

1. Composition comprenant un polyester à fonctionnalité organosilyle, où le polyester à fonctionnalité organosilyle est **caractérisé en ce qu'il** a de multiples doubles liaisons carbone-carbone terminales liées au polyester par une liaison carbone-oxygène-silicium, dans laquelle le polyester à fonctionnalité organosilyle a une structure chimique moyenne (I), (II), ou (III) :
CH₂=CH-SiR₂O-[(CH₂)ₘOC(O)CH₂(CH₂)ₙCH₂C(O)O-]ₒ(CH₂)ₘ-OSiR₂-CH=CH₂ (I)
C(R)[CH₂OX]₃ (II)
CH₃CH(OX)CH₂CH₂OX (III)
où :
R est, indépendamment dans chaque cas, choisi parmi des groupes hydrocarbyle ayant de un à 8 atomes de carbone ;
X est, indépendamment dans chaque cas, choisi parmi -H, -C(O)-(CH₂)₄C(O)OH et -C(O)-(CH₂)₄C(O)OSiR₂-CH=CH₂, où R est tel que décrit ci-dessus à condition qu'au moins deux groupes X soient des groupes -C(O)-(CH₂)₄C(O)OSiR₂-CH=CH₂ ;
l'indice m a, indépendamment dans chaque cas, une valeur moyenne comprise dans une plage de un à 8,
l'indice n a une valeur moyenne comprise dans une plage de 2 à 50 ; et
l'indice o a une valeur moyenne comprise dans une plage de 2 à 10.

2. Composition selon la revendication 1, dans laquelle les doubles liaisons carbone-carbone terminales font partie de groupes vinyle.

3. Composition selon l'une quelconque revendication précédente, dans laquelle le polyester à fonctionnalité organosilyle a une masse moléculaire moyenne en poids moyenne comprise dans une plage de 1 000 à 5 000 g/mol mesurée par la méthode indiquée dans la description.

4. Composition selon l'une quelconque revendication précédente, la composition comprenant le polyester à fonctionnalité organosilyle en combinaison avec un polysiloxane à fonctionnalité SiH comprenant au moins deux fonctionnalités SiH.

5. Composition selon la revendication 4, comprenant en outre un catalyseur d'hydrosilylation et un solvant, où le polyester à fonctionnalité organosilyle et le polysiloxane à fonctionnalité SiH sont dissous dans le solvant pour former une solution.

6. Procédé de préparation de la composition selon la revendication 1, le procédé comprend l'étape consistant à préparer un polyester à fonctionnalité organosilyle en fournissant un polyol de polyester, un agent de silylation à fonctionnalité vinyle et facultativement un catalyseur de silylation, puis à faire réagir l'agent de silylation à fonctionnalité vinyle et le polyol de polyester ensemble facultativement en présence du catalyseur de silylation pour effectuer une silylation du polyol de polyester afin de former le polyester à fonctionnalité organosilyle, dans lequel le polyol de polyester est choisi parmi des polyols de polyester ayant une structure chimique moyenne (IV), (V) ou (VI) :
HO-[(CH₂)ₘOC(O)CH₂(CH₂)ₙCH₂C(O)O-]ₒ(CH₂)ₘ-OH (IV)
C(R)[CH₂OH]₃ (V)
CH₃CH(OH)CH₂CH₂OH (VI)
où :
R est, indépendamment dans chaque cas, choisi parmi des groupes hydrocarbyle ayant de un à 8 atomes de carbone ;
l'indice m a, indépendamment dans chaque cas, une valeur moyenne comprise dans une plage de un à 8 ;
l'indice n a une valeur moyenne comprise dans une plage de 2 à 5 ; et
l'indice o a une valeur moyenne comprise dans une plage de 2 à 10.

7. Procédé selon la revendication 6, dans lequel l'agent de silylation à fonctionnalité vinyle est le 1,1,3,3-tétraalkyl-1,3-divinyldisilazane et la saccharine est présente en tant que catalyseur.

8. Procédé selon la revendication 6 ou 7, dans lequel suffisamment d'agent de silylation à fonctionnalité vinyle est présent pour effectuer une silylation de 80 à 100 pour cent en moles des groupes hydroxyle sur le polyol de polyester et de 80 à 100 pour cent en moles des groupes hydroxyle de polyol de polyester deviennent silylés.
